**Europäisches Patentamt**

**European Patent Office**

**Office européen des brevets**

(19)

(11) Veröffentlichungsnummer: **0 208 302**
**B1**

# (12) EUROPÄISCHE PATENTSCHRIFT

(45) Veröffentlichungstag der Patentschrift:
**02.11.88**

(21) Anmeldenummer: **86109332.6**

(22) Anmeldetag: **08.07.86**

(51) Int. Cl.⁴: **B 60 P 3/025,** E 04 H 15/58,
E 04 H 15/06

(54) **Markise für Verkaufsstände.**

(30) Priorität: **09.07.85 DE 8519796 U**

(43) Veröffentlichungstag der Anmeldung:
**14.01.87 Patentblatt 87/3**

(45) Bekanntmachung des Hinweises auf die Patenterteilung:
**02.11.88 Patentblatt 88/44**

(84) Benannte Vertragsstaaten:
**AT CH DE FR IT LI NL SE**

(56) Entgegenhaltungen:
**FR-A-1 407 131**
**FR-A-2 033 508**
**FR-A-2 507 552**
**GB-A-352 534**
**GB-A-2 134 942**

(73) Patentinhaber: **Mayle, Gerhard, Rosenheimer
Strasse 60, D-8208 Kolbermoor (DE)**
Patentinhaber: **Than, Johannes, Müllers Weg 2,
D-5768 Sundern- Endorf (DE)**

(72) Erfinder: **Mayle, Gerhard, Rosenheimer Strasse 60,
D-8208 Kolbermoor (DE)**
Erfinder: **Than, Johannes, Müllers Weg 2, D-5768
Sundern- Endorf (DE)**

(74) Vertreter: **Fritz, Herbert, Dipl.- Ing., Mühlenberg
74, D-5760 Arnsberg 1 (DE)**

## Beschreibung

Die Erfindung bezieht sich auf ein Markisendach für Verkaufsstände mit den Merkmalen nach dem Oberbegriff des Hauptanspruchs. Bei Markisendächern dieser Art können gleichzeitig zwei Dachflächen durch Abwicklung von Tuchbahnen gebildet werden. Solche Markisendächer kommen insbesondere für fahrbare Verkaufsstände, sogenannte Verkaufsanhänger in Frage, aber auch für stationäre Verkaufsstände, Verkaufstische oder als Markisendächer für Terrassen und Sonnendächer.

Bekannt ist (FR-A-2 507 552) ein Fahrzeug mit einem Markisendach der vorgenannten Art, bei welchem jede der beiden Tuchbahnen eine besondere Tuchwelle hat. Die Tuchwellen sind auf einem Gestell gelagert mit einem horizontalen Träger, der von einem vorderen und einem hinteren Pfosten getragen wird. Beim Transport bleibt das gesamte Gestell in seiner aufrechten Stellung. Weiterhin bekannt (US-A-3 952 758) ist ein Markisendach für ein Kraftfahrzeug, bei dem die beiden Tuchbahnen auf einer gemeinsamen Tuchwelle aufgewickelt sind, wobei die eine Tuchbahn von oben, die andere von unten auf- bzw. abgewickelt wird. Ein solches Markisendach ist jedoch für Verkaufsstände nicht geeignet, da das Gestell aus hydraulisch betätigten teleskopartigen Elementen besteht, die insgesamt gesehen eine komplizierte Konstruktion darstellen.

Die Aufgabe der Erfindung besteht in der Ausbildung eines Markisendaches mit zwei Dachflächen, geeignet für Verkaufsstände und dergleichen, welches in einfacher Weise in die Gebrauchslage aufgestellt und bei Bedarf in eine Transportlage mit minimalem Platzbedarf gebracht werden kann.

Diese Aufgabe wird durch ein Markisendach mit den Merkmalen nach dem Hauptanspruch gelöst. Die Unteransprüche haben weitere Ausgestaltungen und bevorzugte Ausführungsformen zum Inhalt.

Wenn ein solches Markisendach für einen fahrbaren Verkaufsstand vorgesehen ist, dann ist ein Pfosten an der Vorderseite und ein Pfosten an der Rückseite des Anhängers vorgesehen. In dem Transportzustand werden die beiden Tuchbahnen aufgewickelt und die Pfosten werden zusammengeklappt, so daß sich die Pfostenelemente und der Träger flach aufeinanderlegen. Es ergibt sich somit sowohl der Höhe nach als auch in der Breite ein minimaler Platzbedarf. Das zusammengeklappte Gestell kann beim Transport mit einer Plane abgedeckt werden. Der Aufbau erfolgt durch Hochklappen der Pfostenelemente und Feststellen der Gelenke, was mühelos von einer Person allein durchgeführt werden kann. Nach einer Weiterbildung der Erfindung kann eine Tuchbahn nach unten verlängert und unten festgelegt werden, so daß sich auf diese Weise für den Verkaufsständer eine geschlossene Längswand ergibt. In diesem Zusammenhang können für die bodenseitige Festlegung der Tuchwand am Unterbau des Verkaufsstandes besondere Abstandshalter vorgesehen sein. An diesen Abstandshaltern wird die Tuchbahn unten festgelegt, zum Beispiel durch Druckknöpfe, und unter Spannung gehalten. Diese Abstandshalter können auch so ausgebildet sein, daß durch sie die Standfestigkeit eines Verkaufsanhängers verbessert wird. Im übrigen ist die Erfindung nicht auf Verkaufsstände beschränkt, sondern kann vielmehr auch bei Verkaufstischen oder als Markisendächer für Balkone und Terrassen angewandt werden.

Im folgenden werden bevorzugte Ausführungsformen der Erfindung anhand der Zeichnungen näher beschrieben. Dabei zeigen

Fig. 1 einen Verkaufsanhänger mit erfindungsgemäßem Markisendach in der Transportstellung;

Fig. 2 das Markisendach gemäß Fig. 1 in der ersten Aufbauphase;

Fig. 3 das Markisendach gemäß den Fig. 1 und 2 in einer zweiten Aufbauphase;

Fig. 4 das Markisendach gemäß den Fig. 1 bis 3 in aufrechter Position;

Fig. 5 eine Seitenansicht gemäß dem Pfeil V von Fig. 4;

Fig. 6 eine Seitenansicht mit ausgefahrener Markise;

Fig. 7 eine Detailansicht gemäß dem Ausschnitt VII von Fig. 6;

Fig. 8 eine Seitenansicht in Richtung des Pfeils VIII von Fig. 7;

Fig. 9 einen vergrößerten Ausschnitt gemäß dem Pfeil IX in Figur 6;

Fig. 10 eine Ansicht in Richtung des Pfeils X von Fig. 9;

Fig. 11 eine vergrößerte perspektivische Ansicht gemäß dem Ausschnitt XI von Fig. 4;

Fig. 12 eine vergrößerte perspektivische Ansicht gemäß dem Ausschnitt XII von Fig. 4.

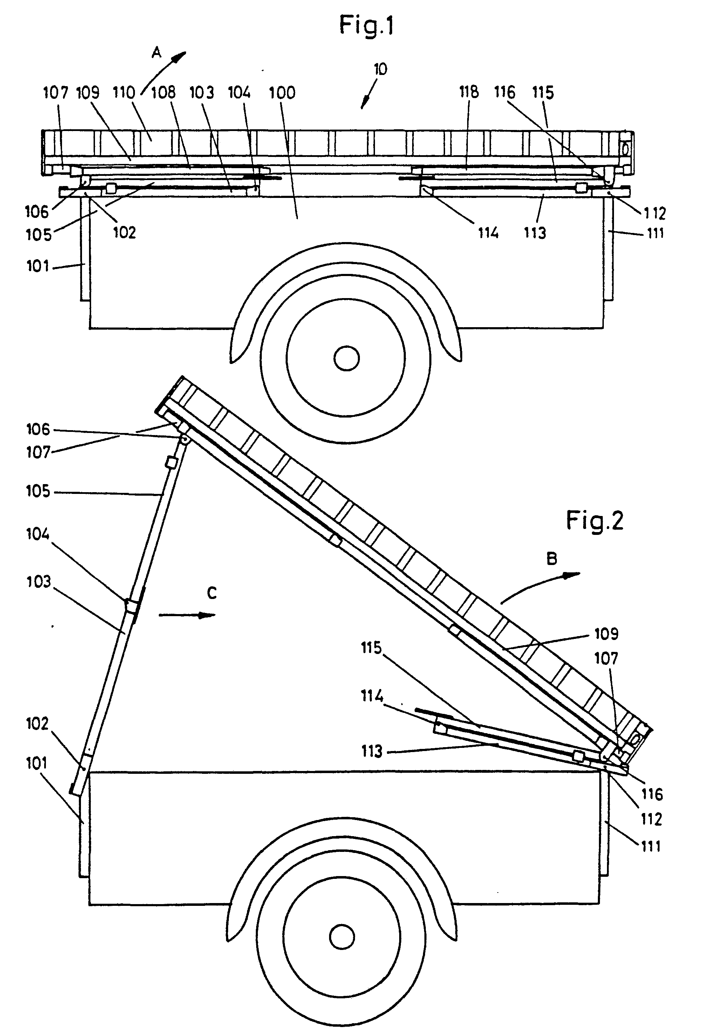

Zunächst wird auf die Fig. 1 bis 4 Bezug genommen.

Fig. 1 zeigt ein Markisendach 10 auf einem Verkaufswagen 100 in der zusammengelegten Transportstellung. An den Stirnseiten eines Verkaufsanhängers 100 sind jeweils feste Pfostenelemente 101, 111 mit Nieten, Schrauben oder dergleichen befestigt. Am oberen Ende dieser festen Pfostenelemente sind jeweils Gelenke 102, 112 für die gelenkige Verbindung zu weiteren Pfostenelementen 103, 113, die in der gezeigten Stellung in horizontaler Lage auf dem Verkaufsanhänger 100 liegen. Die Pfostenelemente 103, 113 sind wiederum über Gelenke 104, 114 an ihren Enden mit weiteren Pfostenelementen 105, 115 verbunden, die in der dargestellten Transportstellung etwa deckungsgleich auf den Pfostenelementen 103, 113 liegen. Die Pfostenelemente 105, 115 sind an ihren Enden wiederum über Gelenke 106, 116 und Laschen mit einem Träger 107 für das Markisendach verbunden. Die Darstellung ist der Übersichtlichkeit halber schematisch vereinfacht. Die Gelenkverbindungen werden weiter unten anhand weiterer Figuren näher erläutert. In der Darstellung sind außerdem eingefahrene Kniehebel 108, 118 sichtbar sowie ein vorderer Stab 109, an dem eines der beiden Tücher befestigt ist. Die Tuchbahnen 110 für das Markisendach befinden sich hier im eingerollten Zustand.

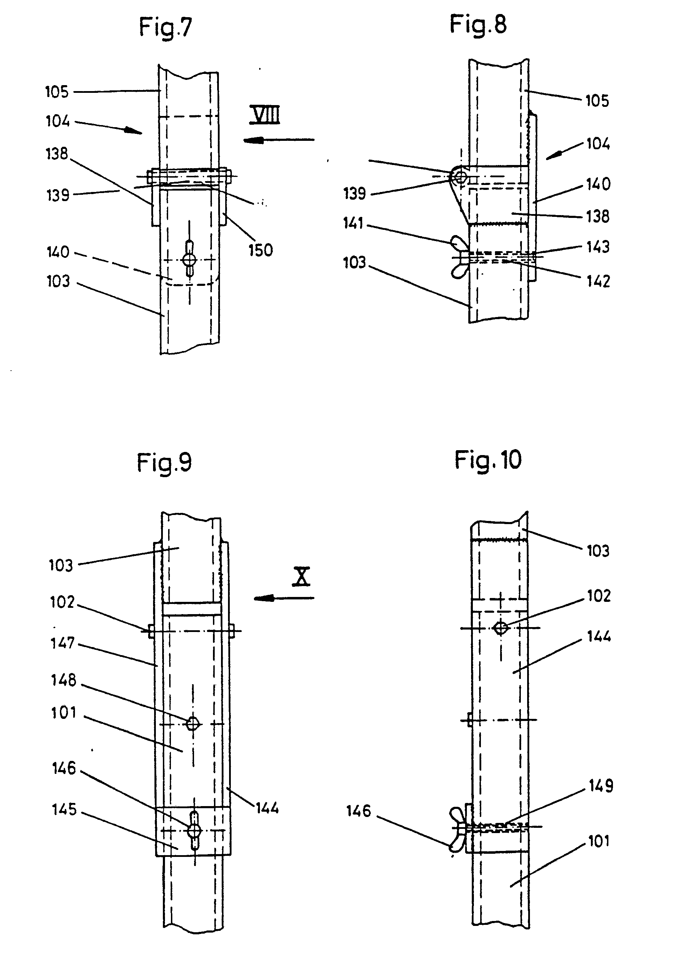

Wenn das Markisendach aufgebaut werden soll, wird zunächst der Träger 107 an einer der beiden Seiten in Richtung des Pfeiles A angehoben und das Dach nach oben geschwenkt, bis die Pfostenelemente 103, 105 miteinander fluchten. An dem Gelenk 104, das in den Fig. 7 und 8 näher dargestellt ist, sind Mittel vorgesehen, um die Pfostenelemente 103, 105 festzulegen, so daß zwischen diesen eine starre Verbindung besteht.

Das Markisendach befindet sich nun in der in Fig. 2 dargestellten Position. Der Träger 107 wird nun auf der in der Darstellung rechten Seite in Richtung des Pfeils B angehoben und etwas seitlich vom Verkaufswagen weggezogen. Auf der linken Seite schwenkt dabei der Pfosten, bestehend aus den Pfostenelementen 103, 105, um das Gelenk 102 ein Stück im Uhrzeigersinn in Richtung des Pfeils C. Das Pfostenelement 113 wird solange um das Gelenk 112 geschwenkt, im Uhrzeigersinn, bis es in vertikaler Position ist und mit dem festen Pfostenelement 111 fluchtet.

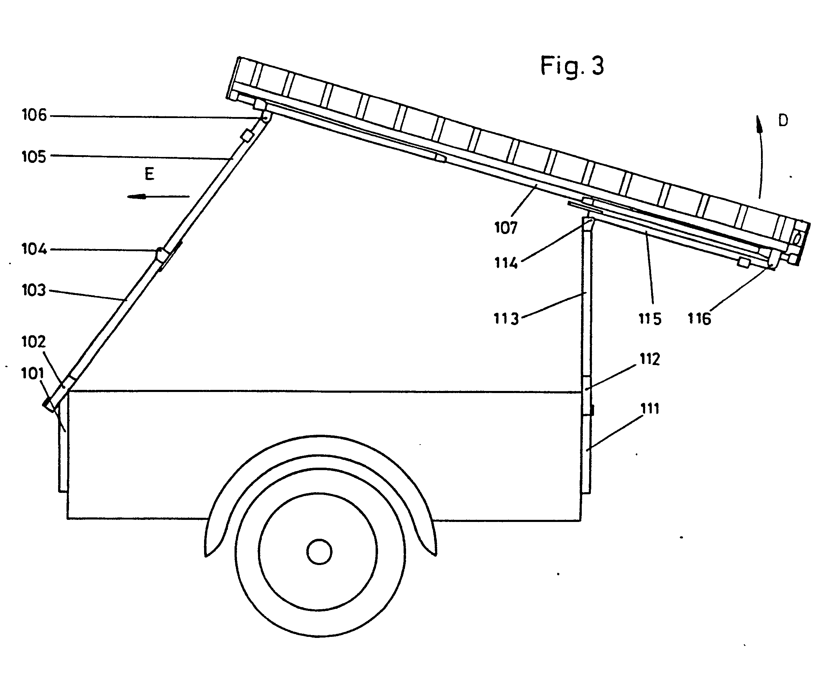

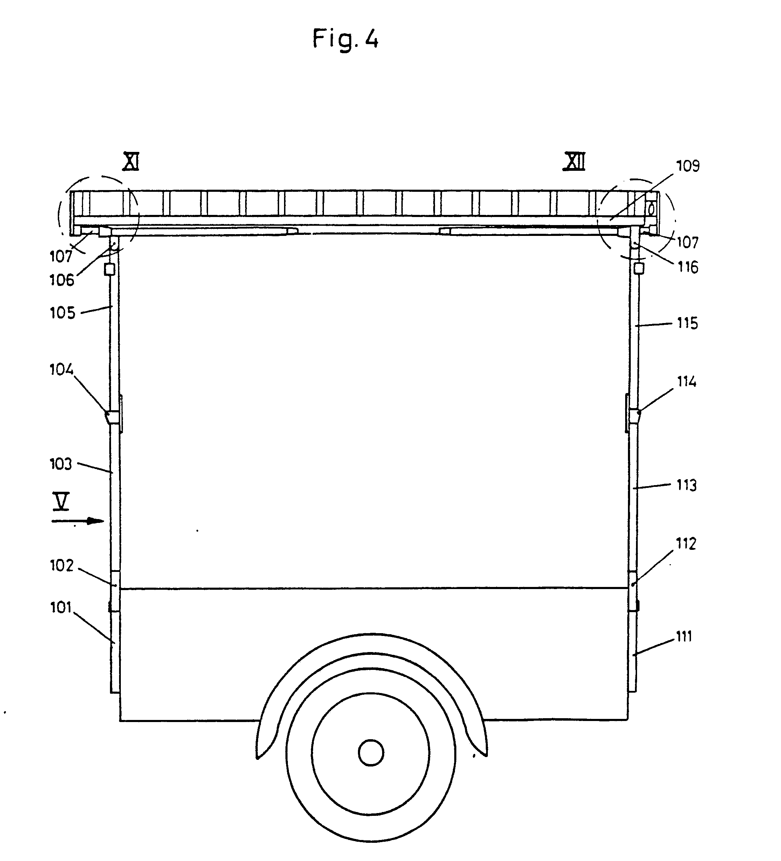

Es ist nun die in Fig. 3 dargestellte Position erreicht. Für das Gelenk 112, das mit dem Gelenk 102 identisch ist, sind wie in den Fig. 9 und 10 näher dargestellt, Mittel vorgesehen, die ein Festlegen des Pfostenelements 113 in vertikaler Position am Pfostenelement 111 ermöglichen. Nachdem dies geschehen ist, wird das Markisendach auf der in der Darstellung nach Fig. 3 rechten Seite weiter geschwenkt in Richtung des Pfeiles D. Dabei schwenkt das Pfostenelement 115 im Gegenuhrzeigersinn um das Gelenk 114 solange, bis es auch senkrecht steht und somit mit dem unteren Pfostenelement 113 fluchtet. Es kann dann mittels einer Flügelschraube 141 (Fig. 8) des Gelenks 114, das dem Gelenk 104 entspricht, das Pfostenelement 115 am Pfostenelement 113 festegelegt werden. Bei der Schwenkbewegung in Richtung des Pfeils D von Fig. 3 schwenkt gleichzeitig der linke Pfosten, bestehend aus den Pfostenelementen 103, 105 um das Gelenk 102 im Gegenuhrzeigersinn, bis sich auch er in der aufrechten Position befindet. Das Pfostenelement 103 wird dann mit Befestigungsmitteln an dem festen Pfostenelement 101 festgelegt. Die beiden Pfosten, bestehend aus den Pfostenelementen 103, 105 bzw. 113, 115 befinden sich nun jeweils in aufrechter Position, die in Fig. 4 dargestellt ist.

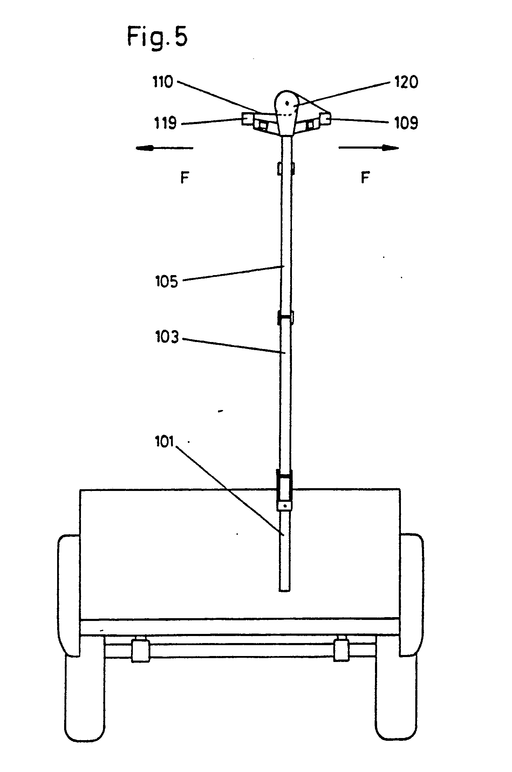

Es wird nun weiter Bezug genommen auf Fig. 5. Fig. 5 zeigt das erfindungsgemäße Markisendach auf einem fahrbaren Verkaufsanhänger in aufrechter Position in der Seitenansicht von Fig. 4. Auf einer Tuchwelle 120 sind zwei Tücher 130, 131 gewickelt, die an ihren frei herausziehbaren Rändern an zur Tuchwelle parallelen Stäben 109, 119 befestigt sind. Bei Drehung der Tuchwelle mittels eines hier nicht näher dargestellten Antriebs werden die beiden Stäbe 109, 119 symmetrisch nach außen gefahren in Richtung der Pfeile F. Dabei werden gleichzeitig die beiden Tücher, eines oben und eines unten, von der Tuchwelle abgewickelt, so daß sich im ausgefahrenen Zustand ein von der Mitte jeweils nach außen geneigtes Schutzdach ergibt.

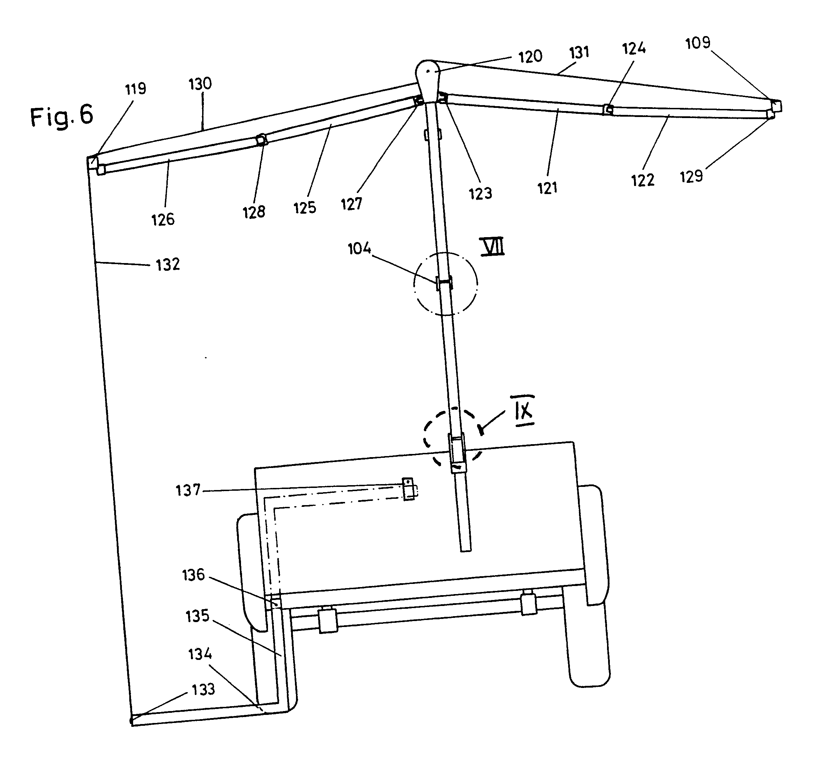

Der ausgefahrene Zustand ist in Fig. 6 näher dargestellt. Jedem Pfosten ist dabei ein Kniehebelsystem mit auf jeder Seite jeweils zwei Kniehebeln 121, 122 bzw. 126, 125 zugeordnet. Die Kniegelenke der Kniehebel sind mit 124 bzw. 128 bezeichnet und hier nur schematisch dargestellt. An ihrem äußeren Ende sind die Kniehebel 122, 126 jeweils über Gelenke 129 mit den parallel zur Tuchwelle verlaufenden Stäben 109, 119 verbunden. An ihrem Ende sind die Kniehebel 121, 125 jeweils über Gelenke 123, 127 mit dem unter der Tuchwelle 120 befindlichen Träger 107 verbunden.

Gemäß einer bevorzugten Ausführungsform der Erfindung ist eine zusätzliche Tuchbahn 132 vorgesehen, die eine Längswand des Verkaufsstands bildet und an ihrem oberen Ende an dem Stab 119 festgelegt ist. An ihrem unteren Ende ist die Tuchbahn 132 rechts und links jeweils mittels Druckknöpfen oder dergleichen an einem Abstandshalter festgelegt und somit auf Spannung gehalten. Der Abstandshalter ist hier in der Seitenansicht etwa L-förmig und besteht aus zwei Stäben oder Rohren 134, 135. Der Stab 135 des Abstandshalters ist mittels eines Gelenks 136 am Anhänger gelenkig befestigt. Beim Abbauen des Markisendachs wird die Befestigung 133 gelöst und der Abstandshalter um 180° im Uhrzeigersinn um das Gelenk 136 geschwenkt, so daß er sich dann in der gestrichelt dargestellten Position befindet. Am Anhänger ist eine Halterung 137 vorgesehen, die den Schenkel 134 des Abstandshalters in dieser Ruhelage aufnimmt.

Das Gelenk 104 zwischen den beiden Pfostenelementen 103 und 105 ist in den Fig. 7 und 8 näher dargestellt. Es ist eine Platte 140 vorgesehen, die in ihrem oberen Bereich mit dem oberen Pfostenelement 105 durch Schweißen verbunden ist. Die Platte 140 hat in ihrem unteren Bereich ein Innengewinde 143. In dem Pfostenelement 103 ist eine Bohrung 142 vorgesehen für eine Flügelschraube 141, so daß bei gerader Verbindung der beiden Pfostenelemente 103, 105 die Platte 140 mittels der Flügelschraube 141 am Pfostenelement 103 anliegend festgeschraubt werden kann. Nach dem Lösen der Schraube 141 kann das Pfostenelement 103 gegen das Pfostenelement 105 im Uhrzeigersinn verschwenkt werden. Für das Gelenk ist ein Gelenkbolzen 139 vorgesehen, der in zwei Laschen 138, 150 gelenkig gelagert ist, wobei die Laschen mit dem unteren Pfostenelement 103 fest verbunden sind.

Das Gelenk 102 ist in den Fig. 9 und 10 näher dargestellt. Es sind zwei Laschen 144, 147 vorgesehen, die oben mit dem Pfostenelement 103 fest verbunden sind und zwischen denen das untere Pfostenelement 101 aufgenommen wird. Unten sind die beiden Laschen durch eine Platte 145 verbunden. Bei gerader Verbindung der beiden Pfostenelemente 101 , 103 wird die Platte 145 mittels der Flügelschraube 146, für die eine Gewindebohrung 149 im Pfostenelement 101 vorgesehen ist, an diesem Pfostenelement festgelegt. Nach dem Lösen der Schraube 146 erfolgt die Drehung des Pfostenelements 103 um den Gelenkbolzen 102. Dagegen ist das untere Pfostenelement 101 durch Befestigungsmittel in lotrechter Stellung am Verkaufsstand fixiert.

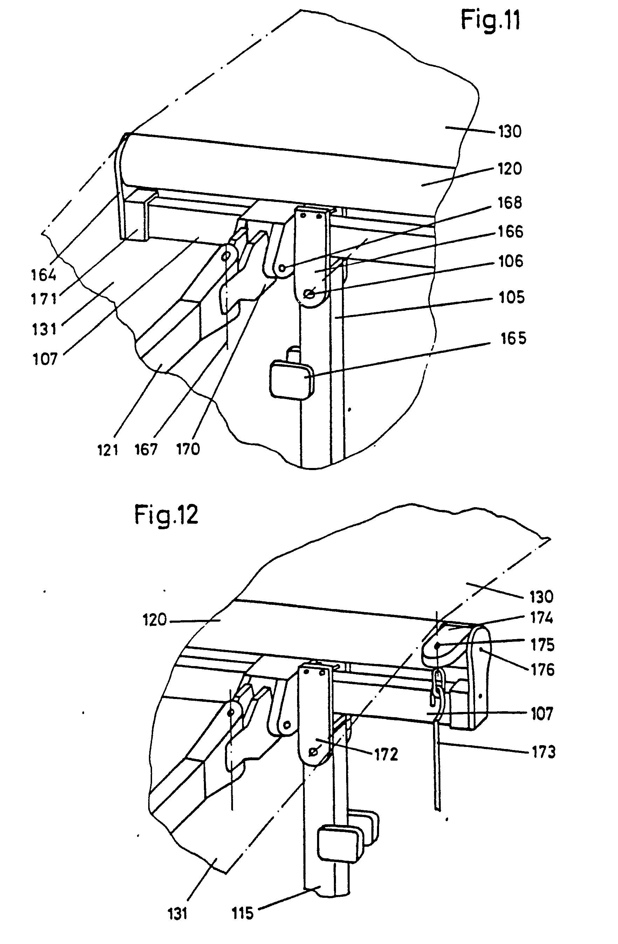

Wie aus Fig. 11 ersichtlich, ist das obere Pfostenelement 105 an seinem oberen Ende um die horizontale Achse eines Gelenks 106, die senkrecht auf der Achse der Tuchwelle 120 steht, schwenkbar mit dem Träger 107 verbunden. An dem Träger 107 sind zwei Laschen 166 angebracht, zwischen denen das Pfostenelement 105 aufgenommen wird. Die Drehbewegung erfolgt um einen drehbar gelagerten Gelenkbolzen. Weiter unten hat das Pfostenelement 105 zwei weitere Laschen 165, zwischen denen im zusammengeklappten Zustand (Fig. 1) das untere Pfostenelement 103 liegt.

Eine Gelenkgabel 169, die auf dem Träger 107 sitzt, nimmt eine weitere Gelenkgabel 170 auf. Die beiden Gelenkgabeln 169, 170 sind mittels eines Gelenkbolzens so verbunden, daß sich die Gelenkgabel 170 in der Gelenkgabel 169 um die horizontale Gelenkachse 168 drehen kann. Die Gelenkgabel 170 ist an ihrem dem Kniehebel 121 zugewandten Ende ringförmig ausgestaltet (nicht dargestellt). In dem Ring der Gelenkgabel 170 ist ein weiterer Gelenkbolzen drehbar gelagert, der mittels Zapfen oder dergleichen wiederum mit dem Ende des Kniehebels 121 fest verbunden ist. Es wird so eine Drehung des Kniehebels 121 gegenüber der Gelenkgabel 170 um eine vertikale Gelenkachse 167 ermöglicht, Die Verbindung zwischen dem Kniehebel 121 und dem Träger 107 ist also eine Art Kardangelenk, da zum einen eine Drehung um die vertikale Achse 167 und zum anderen eine Drehung um die horizontale Achse 168, die auf der ersten Achse 167 senkrecht steht, erfolgen kann. Das Kardangelenk ist notwendig, damit die Stäbe 109, 119 mittels der Kniehebel 121, 122 bzw. 125, 126 seitlich ausgefahren werden können. Bei der Ausführungsform mit zwei Pfosten sind insgesamt vier derartige Kardangelenke erforderlich.

Wie aus Fig. 12 hervorgeht, ist das obere Pfostenelement 115 in gleicher Weise wie das Pfostenelement 105 über zwei Laschen 172 und einen Gelenkbolzen am oberen Ende mit dem Träger 107 gelenkig verbunden. Die Tuchwelle 120 ist stirnseitig jeweils mit einer Blende 164 bzw. 176 verkleidet. Der Antrieb der Tuchwelle erfolgt in dem dargestellten Ausführungsbeispiel von Hand mittels eines Stabs 173, der an seinem oberen Ende mit einem Haken in einen Ring eingreift. Der Ring ist fest verbunden mit einem Bolzen 175, der in einem Gehäuse 174 um eine vertikale Achse drehbar gelagert ist. Es sind geeignete Getriebemittel vorgesehen (nicht dargestellt), durch die die Drehung des Bolzens 175 um seine vertikale Achse in eine Drehung der Tuchwelle 120 um ihre horizontale Achse umgesetzt werden.

**Patentansprüche**

1. Markisendach für Verkaufsstände
- mit einer drehbar gelagerlten Tuchwelle (120) zwei aufgewickelten Tüchern (130, 131), die an ihren frei herausziehbaren Rändern an zur Tuchwelle parallelen Stäben (109, 119) befestigt sind, die bei Drehung der Tuchwelle mittels eines Antriebs symmetrisch nach außen fahrbar sind unter gleichzeitiger Abwicklung der beiden Tücher, so daß diese im ausgefahrenen Zustand ein von der Mitte jeweils nach außen geneigtes Schutzdach bilden;
- ein Tuchwellenträger (107) wird jeweils endseitig durch einen am Verkaufsstand ortsfest angebrachten Pfosten gehalten;
- dabei ist an jeder Längsseite des Trägers ein Kniehebelsystem (121, 122, 125, 126) befestigt, das an jeder Seite eine gelenkige Verbindung mit dem an dieser Seite gelegenen Stab herstellt;
gekennzeichnet durch folgende weitere Merkmale:
- die beiden Pfosten bestehen jeweils aus zwei etwa gleichlangen Pfostenelementen (103, 105, 113, 115), die jeweils miteinander durch ein Gelenk (104, 114) verbunden sind;
- dabei ist das jeweils obere Pfostenelement (105, 115) über ein Gelenk (106, 116) mit dem Träger (107) verbunden;
- das jeweils untere Pfostenelement (103, 113) ist über ein Gelenk (102, 112) mit einem jeweils ortsfesten unteren Pfostenelement (101, 111) verbunden;
- die Pfostenelemente und der Träger sind im Bereich des Verkaufsstandes aufeinanderliegend zusammenklappbar;
- es sind Mittel (141, 146) vorgesehen, die ein Feststellen der Gelenke (102, 112, 104, 114) in lotrechter Stellung der Pfosten ermöglichen.

2. Markisendach nach Anspruch 1, dadurch gekennzeichnet, daß an einer Längsseite eines Stabes (119) eine zusätzliche Tuchbahn (132) anbringbar ist, die sich vertikal nach unten erstreckt.

3. Markisendach nach Anspruch 2, dadurch gekennzeichnet, daß die Tuchbahn (132) an ihrem unteren Ende durch Befestigungsmittel (133) an einem bodenseitigen Schenkel eines oder mehrerer etwa L-förmiger Abstandshalter (134) festlegbar ist, die jeweils mit einem lotrechten Schenkel am Verkaufsstand gehalten sind.

4. Markisendach nach Anspruch 3, dadurch gekennzeichnet, daß die L-förmigen Abstandshalter (134, 135) jeweils mittels eines Gelenkes (136) am Verkaufsständer befestigt und bei einer Schwenkung von etwa 180° in einer Halterung (137) am Verkaufsständer festlegbar sind.

## Claims

1. Awning for vending stands
- comprising a rotatably mounted shaft (120) for the cloth, two wound up cloths (130, 131) being fixed with their ends which can be freely drawn out at rods (109, 119) which are parallel to the shaft for the cloth and can be driven symmetrically outwards when the shaft for the cloth is rotated by means of a driving unit with a simultaneous unwinding of the two cloths so that these, in the driven out condition, form a protective roof which inclines outwardly from the middle;
- a carrier (107) for the shaft for the cloth is in each case held at its ends by a post which is stationarily mounted to the vending stand;
- at each longitudinal side of the carrier there is mounted a toggle-lever system (121, 122, 125, 126) which at each side forms an articulated connection to the rod arranged at this side;
characterised by the following further features:
- the two posts each consist of two post elements (103, 105, 113, 115) having approximately the same length which are in each case connected to one anonther by means of a hinged joint (104, 114);
- the post element (105, 115) which is at the top is in each case connected to the carrier (107) by means of a hinged joint (106, 116);
- the lower post element (103, 113) is in each case connected to a stationary lower post element (101, 111) by means of a hinged joint (102, 112);
- the post elements and the carrier are collapsible in such a manner that they lie upon one another in the region of the vending stand;
- means (141, 146) are provided which allow an arresting of the hinged joints (102, 112, 104, 114) in the vertical position of the posts.

2. Awning according to claim 1, characterised in that at one longitudinal side of one rod (119) an additional width of cloth (132) can be mounted which extends vertically downwards.

3. Awning according to claim 2, characterised in that the width of cloth (132) can be fixed at its lower ends by fastening means (133) to a bottomside leg of one or more L-shaped spacers (134) which in each case are mounted with a vertical leg at the vending stand.

4. Awning according to claim 3, characterised in that the L-shaped spacers (134, 135) are each mounted to the vending stand by means of a hinged joint (136) and in the case of a pivot motion of about 180° are fixable in a holding device (137) provided at the vending stand.

## Revendications

1. Marquise pour stand de vente,
- comportant une barre à tissu (120) pivotante, deux toiles (130, 131) enroulées, fixées par leurs bords libres, pouvant être tirés, à des barres (109, 119) paralleles à la barre à tissu, et qui, par rotation de la barre à tissu au moyen d'un entraînement, peuvent être déplacées symétriquement vers l'extérieur, avec déroulement simultané des deux toiles, de façon à ce que celles-ci forment, lorsqu'elles sont étendues, un toit protecteur incliné du centre vers l'extérieur;
- avec un support de barre à tissu (107) maintenu à son extrémité par un montant fixe disposé sur le stand de vente;
- un système à genouillère (121, 122, 125, 126), qui réalise de chaque côté une liaison articulée avec la barre située de ce côté, étant fixé à chaque face longitunale du support;
caractérisée par ce qui suit:
- les deux montants sont constitués par deux éléments de longeur essentiellement égale (103, 105, 113, 115), qui sont reliés entre eux par une articulation (104, 114);
- chacun des éléments de montant supérieurs (105, 115) est relié au support (107) via une articulation (106, 116);
- chacun des éléments de montant inférieurs (103, 113) est relié par une articulation (102, 112) à un élément de montant inférieur (101, 111) fixe;
- les éléments de montant et le support sont rabattables l'un sur l'autre à plat au niveau du stand de vente;
- des moyens (141, 146) sont prévus, qui permettent une immobilisation des articulations (102, 112, 104, 114) en position verticale des montants.

2. Marquise selon la revendication 1, caractérisée en ce qu'un pan de tissu (132) supplémentaire, qui s'étend verticalement vers le bas, peut être disposé sur le bord longitudinal d'une barre (119).

3. Marquise selon le revendication 2, caractérisée en ce que le pan de tissu (132) peut être fixé par son extrémité inférieure, grâce à des moyens de fixation (133), à la branche côté sol d'un ou de plusieurs écarteurs (134) en forme de L, qui sont fixés au stand de vente par une branche verticale.

4. Marquise selon la revendication 3, caractérisée en ce que les écarteurs (134, 135) en forme de L sont fixés au stand de vente au moyen d'une articulation (136) et peuvent être fixés au stand de vente par une attache (137), après rotation de quelques 180°.

## Fig.1

## Fig.2

Fig. 3

# Fig. 4

## Fig.5

Fig. 6

## Fig.7

105

104

138

139

VIII

140

103

150

## Fig.8

105

104

139

140

141

138

103

143

142

## Fig.9

103

102

147

148

101

146

145

X

144

## Fig.10

103

102

144

146

149

101

**Fig.11**

130
120
168
166
106
105
165

164
171
131
107

121 167 170

**Fig.12**

130
174
175
176
107
173

120

172

131 115